# EUROPÄISCHE PATENTSCHRIFT

(11) **EP 3 484 743 B1**
(45) Veröffentlichungstag und Bekanntmachung des Hinweises auf die Patenterteilung: **05.04.2023**
(21) Anmeldenummer: 17735545.0
(22) Anmeldetag: 06.07.2017
(51) Int. Cl.: B60N 2/07

(54) **LÄNGSEINSTELLER SOWIE FAHRZEUGSITZ**
LONGITUDINAL ADJUSTER AND VEHICLE SEAT
DISPOSITIF DE RÉGLAGE LONGITUDINAL ET SIÈGE DE VÉHICULE

(30) Priorität: 14.07.2016 DE 102016212906; 21.12.2016 DE 102016225784
(43) Veröffentlichungstag der Anmeldung: 22.05.2019
(73) Patentinhaber: KEIPER Seating Mechanisms Co., Ltd., Shanghai 201315 (CN)
(72) Erfinder: EMRICH, Holger, 66887 Erdesbach (DE); KOENIG, Michael, 67688 Rodenbach (DE); REISCHMANN, Martin, 66989 Hoehfroeschen (DE); RHEINHEIMER, Frank, 76833 Boechingen (DE); VELTEN, Ralf, 67716 Heltersberg (DE)
(74) Vertreter: Kutzenberger Wolff & Partner
(86) Internationale Anmeldenummer: PCT/EP2017/066924
(87) Internationale Veröffentlichungsnummer: WO 2018/011053

(56) Entgegenhaltungen:
- EP-A1- 2 223 822
- DE-B4- 10 210 555

## Beschreibung

Die Erfindung betrifft einen Längseinsteller mit den Merkmalen des Oberbegriffs des Anspruchs 1 sowie einen Fahrzeugsitz.

### Stand der Technik

Aus der DE 102 10 555 B4 sind ein gattungsgemäßer Längseinsteller sowie ein gattungsgemäßer Fahrzeugsitz bekannt. Der Längseinsteller umfasst zwei relativ zueinander verschiebbare Sitzschienen, nämlich eine Oberschiene und eine Unterschiene, welche einander wechselseitig umgreifen. Die Sitzschienen umfassen jeweils Anschlagmittel, wobei die Anschlagmittel im Crashfall eine zusätzliche Verbindung zwischen der Oberschiene und der Unterschiene schaffen. In einem Crashfall auftretende Kräfte werden dann zusätzlich über die besagten Anschlagmittel von der Oberschiene und der Unterschiene in die Fahrzeugstruktur eingeleitet.

Ein ebensolcher Längseinsteller sowie ein ebensolcher Fahrzeugsitz sind aus der US 2005/0230591 A1 bekannt.

Aus der EP 2 223 822 A1 ist eine fahrzeugseitige Gleitvorrichtung bekannt, welche eine untere Schiene mit einem Basisabschnitt aufweist, der sich gegenüberliegend zu einem Fahrzeugboden erstreckt. Ferner weist die untere Schiene zwei erste Innenabschnitte, die sich in engem Kontakt von einem Mittelteil des Basisabschnitts nach oben erstrecken, und untere Hakenabschnitte auf, die sich nach außen erstrecken, wobei die oberen Enden der beiden ersten Innenabschnitte jeweils eine umgekehrte U-Buchstabenform aufweisen. Die Gleitvorrichtung ferner aufweisend eine obere Schiene mit einem horizontalen Wandabschnitt, parallel zu dem Basisabschnitt, und vertikale Wandabschnitte, die sich von beiden Enden des horizontalen Wandabschnitts nach unten erstrecken. Ferner ist die obere Schiene mit einem Hakenelement versehen, das Verbindungsabschnitte aufweist, die mit beiden vertikalen Wandabschnitten verbunden sind und sich nach unten erstrecken, und obere Hakenelement, die sich von den unteren Enden der Verbindungsabschnitte nach innen erstrecken, um jeweils eine U-Buchstabenform anzunehmen. Wenn eine Trennlast gegen die untere Schiene auf die obere Schiene ausgeübt wird, werden die unteren Hakenabschnitte und die oberen Hakenabschnitte in Eingriff gebracht.

### Aufgabe

Der Erfindung liegt die Aufgabe zu Grunde, einen Längseinsteller der eingangs genannten Art zu verbessern, insbesondere die Festigkeit des Längseinstellers im Crashfall zu erhöhen, sowie einen entsprechenden Fahrzeugsitz bereitzustellen.

### Lösung

Diese Aufgabe wird erfindungsgemäß durch die Merkmale des Anspruchs 1 gelöst.

Dadurch, dass das Verstärkungsprofil einen Verbindungsabschnitt aufweist, welcher nach hinten aus dem Innenkanal herausgeführt ist und mit einem hinteren Ende, insbesondere mit einer nach hinten gerichteten Oberfläche, eines Sitzrahmenseitenteils verbindbar ist, lässt sich eine vertikale Krafteinwirkung durch eine Belastung des Sitzrahmenseitenteils im Crashfall besonders gut auf das Verstärkungsprofil weiterleiten, wodurch ein sogenannter Kapselhebereffekt im Bereich einer Verschraubung des Sitzrahmenseitenteils mit der ersten Sitzschiene durch eine zu hohe Belastung vermieden wird. Folglich lässt sich die Festigkeit des Längseinstellers im Crashfall erhöhen. Unter der "nach hinten gerichteten Oberfläche" wird insbesondere eine Oberfläche des Sitzrahmenseitenteils bezeichnet, welche eine im Wesentlichen parallel zur Längsrichtung verlaufende Normale aufweist. Unter dem "Sitzrahmenseitenteil" wird allgemein auch ein Bauteil des Sitzrahmens, ein Querprofil, ein Verstärkungselement des Sitzrahmens, oder dergleichen verstanden.

Vorteilhafte Ausgestaltungen, welche einzeln oder in Kombination miteinander eingesetzt werden können, sind Gegenstand der Unteransprüche.

Der Verbindungsabschnitt kann ferner einteilig mit dem Verstärkungsprofil ausgestaltet sein. Der Verbindungsabschnitt ist um ca. 90° um eine in Querrichtung verlaufende Biegeachse nach oben umgebogen.

Der Verbindungsabschnitt kann annähernd senkrecht von einem Grundkörper, insbesondere einem hinteren Ende des Grundkörpers, des Verstärkungsprofils abstehen. Der Grundkörper kann weitestgehend eben sein. Der Grundkörper kann senkrecht zur Vertikalrichtung ausgerichtet sein.

Das Verstärkungsprofil kann bevorzugt aus Metall, insbesondere aus einem Metallblech, gefertigt sein. Das Verstärkungsprofil kann beispielsweise bei einem auf einem Sitzschienenpaar vormontierten Fahrzeugsitz vom hinteren Ende des Schienenpaares in den Innenkanal zwischen der ersten Sitzschiene und der zweiten Sitzschiene einschiebbar sein. Das Verstärkungsprofil kann mittels eines Fixierelements in einer nach hinten gerichteten Oberfläche des Sitzrahmenseitenteils gehalten sein. Das Fixierelement kann beispielsweise ein Niet oder eine Schraubverbindung sein.

Das Verstärkungsprofil kann mittels einer Schraube-Mutter-Anordnung an der ersten Sitzschiene fixiert sein, insbesondere kann eine Mutter der Schraube-Mutter-Anordnung vor einem Verdrehen relativ zur ersten Sitzschiene gesichert sein. Mittels der Schraube-Mutter-Anordnung kann ferner ein Sitzrahmenseitenteil mit der ersten Sitzschiene verbindbar sein. Die Mutter der Schraube-Mutter-Anordnung kann einen Querschnitt aufweisen, welcher sich seitlich wenigstens abschnittsweise an der ersten Sitzschiene abstützt. Die Mutter kann im Innenkanal an der ersten Sitzschiene gegen ein Verdrehen gesichert sein. Die Mutter kann einen im Wesentlichen rechteckigen Querschnitt aufweisen. Die Mutter kann entlang ihrer Seitenflächen Längsnuten aufweisen. Die Mutter kann, insbesondere mit einem unteren Abschnitt, in einer im Innenkanal an der zweiten Sitzschiene angeordneten Führungsschiene geführt sein. Die Führungsschiene kann an der zweiten Sitzschiene fixiert sein. Die Führungsschiene und der untere Abschnitt der Mutter können einander umgreifen. Die Führungsschiene kann in Längsnuten der Mutter seitliche eingreifen.

Das Verstärkungsprofil kann in der Querrichtung betrachtet einen im Wesentlichen L-förmigen Querschnitt aufweisen.

Ferner kann es vorgesehen sein, dass der Verbindungsabschnitt einen Vorsprung und das Sitzrahmenseitenteil eine Ausnehmung aufweist, wobei in montiertem Zustand der Vorsprung des Verbindungsabschnitts in die Ausnehmung des Sitzrahmenseitenteils eingreift. An dem Verbindungsabschnitt des Verstärkungsprofils kann eine Mehrzahl an Vorsprüngen angeordnet sein. Die Vorsprünge können parallel zur Längsrichtung nach vorne von dem Verbindungsabschnitt abstehen. Die Vorsprünge können paarweise an einer linken und einer rechten Seite des Verbindungsabschnitts angeordnet, insbesondere nach vorne umgebogen, sein. Die Vorsprünge können hakenförmig ausgestaltet sein. Die Vorsprünge können im Falle einer Belastung und Kontaktierung des Sitzrahmenseitenteils das Sitzrahmenseitenteil im Bereich der Ausnehmungen hintergreifen. Alternativ kann es vorgesehen sein, dass der Verbindungsabschnitt eine Ausnehmung und das Sitzrahmenseitenteil einen Vorsprung aufweist, wobei in montiertem Zustand der Vorsprung des Sitzrahmenseitenteils in die Ausnehmung des Verbindungsabschnitts des Verstärkungsprofils eingreift.

In dem Verbindungsabschnitt und der nach hinten gerichteten Oberfläche kann zur Verbindung mittels des Fixierelements jeweils eine Durchgangsbohrung vorgesehen sein. Der Verbindungsabschnitt kann oberhalb und unterhalb einer Durchgangsbohrung jeweils eine Ausnehmung aufweisen. Das Sitzrahmenseitenteil kann oberhalb und unterhalb der Durchgangsbohrung einen Vorsprung aufweisen. In montiertem Zustand können die Vorsprünge des Sitzrahmenseitenteils in die Ausnehmungen des Verbindungsabschnitts des Verstärkungsprofils eingreifen.

Alternativ kann der Verbindungsabschnitt oberhalb und unterhalb der Durchgangsbohrung jeweils einen Vorsprung und das Sitzrahmenseitenteil oberhalb und unterhalb der Durchgangsbohrung eine Ausnehmung aufweisen, wobei die Vorsprünge des Verbindungsabschnitts des Verstärkungsprofils in montiertem Zustand in die Ausnehmungen des Sitzrahmenseitenteils eingreifen.

Ein Durchmesser der Durchgangsbohrung im Verbindungsabschnitt kann geringfügig größer sein, als ein Durchmesser der Durchgangsbohrung im Sitzrahmenseitenteil. Zwischen dem Fixierelement und dem Verbindungsabschnitt kann ein Spalt gebildet sein. Das Fixierelement kann das Verstärkungsprofil an dem Sitzrahmenseitenteil lediglich in Längsrichtung halten. Senkrecht zur Längsrichtung kann das montierte Verstärkungsprofil ein geringfügiges Spiel aufweisen.

Die Vorsprünge des Sitzrahmenseitenteils können aus der nach hinten gerichteten Oberfläche nach hinten, beispielsweise mittels Freischneidens und Umbiegens, ausgestellt sein. Die Vorsprünge können aus der nach hinten gerichteten Oberfläche ausgeprägt oder an die nach hinten gerichtete Oberfläche angeschweißt sein.

Die Vorsprünge können im Bereich einer oberen Kante mit einem oberen Randabschnitt der Ausnehmungen in Eingriff bringbar sein. Eine Kraft in Vertikalrichtung kann über den Verbindungsabschnitt in das Verstärkungsprofil einleitbar und nach einem Verkrallen des Verstärkungsprofils und des Ankers miteinander, unmittelbar weiter über einen Schienen-Boden-Adapter in die Fahrzeugstruktur einleitbar sein.

Eine Anbindung des Verbindungsabschnitts an den restlichen Körper des Verstärkungsprofils kann im Wesentlichen über die gesamte Breite des Verstärkungsprofils, insbesondere die gesamte Erstreckung in Querrichtung, erfolgen, wodurch eine Belastbarkeit der Verbindung zwischen dem Sitzrahmenseitenteil und dem Verstärkungsprofil erhöht ist.

Die Aufgabe wird ferner gelöst durch einen Fahrzeugsitz mit einem Längseinsteller gemäß vorstehender Beschreibung, wobei der Fahrzeugsitz ein Sitzrahmenseitenteil aufweist, welches mit der ersten Sitzschiene verbunden ist. Der erfindungsgemäße Fahrzeugsitz weist folglich die gleichen Vorteile auf, wie die zuvor beschriebenen Ausgestaltungen des Längseinstellers.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Darstellung eines erfindungsgemäßen Fahrzeugsitzes,
- Fig. 2:: eine ausschnittsweise vergrößerte Ansicht auf ein hinteres Ende des Längseinstellers gemäß eines ersten Ausführungsbeispiels,
- Fig. 3:: eine Ansicht auf das hintere Ende des Längseinstellers von Fig. 2 ohne ein Fixierelement,
- Fig. 4:: eine Ansicht auf das hintere Ende des Längseinstellers von Fig. 2 ohne ein Sitzrahmenseitenteil,
- Fig. 5:: eine Darstellung eines Querschnitts des Längseinstellers von Fig. 4,
- Fig. 6:: eine ausschnittsweise Schnittdarstellung senkrecht zu einer Querrichtung durch den Längseinsteller von Fig. 2,
- Fig. 7:: eine Darstellung eines Längsschnitts durch den Längseinsteller von Fig. 4,
- Fig. 8:: eine perspektivische Ansicht eines Verstärkungsprofils eines zweiten Ausführungsbeispiels des Längseinstellers,
- Fig. 9:: eine ausschnittsweise vergrößerte Ansicht auf ein hinteres Ende des Längseinstellers mit dem Verstärkungsprofil von Fig. 8,
- Fig. 10:: eine perspektivische Ansicht auf den Längseinsteller von Fig. 9 ohne das Sitzrahmenseitenteil,
- Fig. 11:: eine Vorderansicht des Längseinstellers von Fig. 10, und
- Fig. 12:: eine Vorderansicht auf einen Längseinsteller gemäß eines dritten Ausführungsbeispiels.

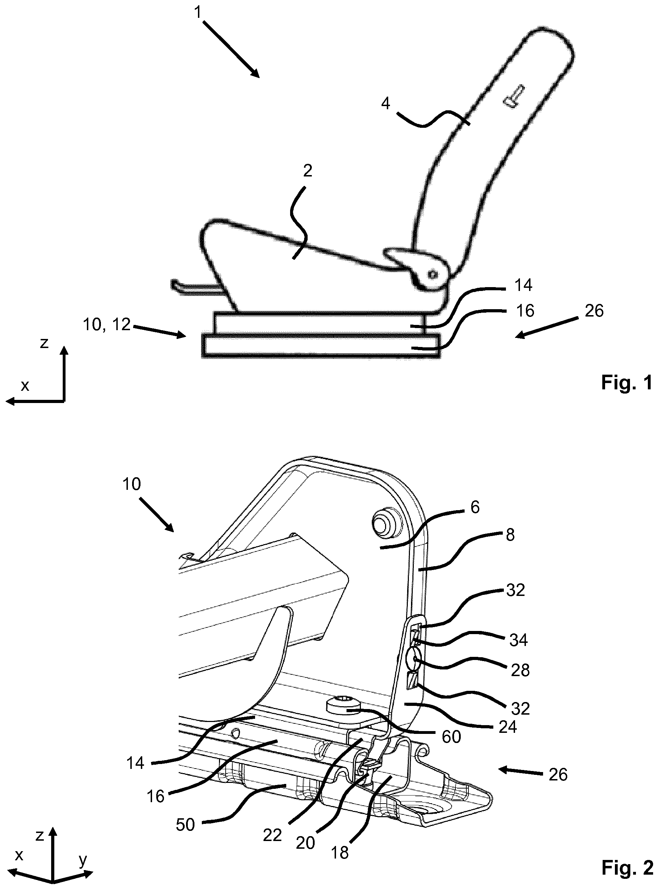

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz sitzenden Insassen in normaler Sitzposition, wobei der Fahrzeugsitz im Fahrzeug eingebaut, in einer zur Personenbeförderung geeigneten Gebrauchsposition mit aufrecht stehender Lehne und wie üblich in Fahrtrichtung ausgerichtet ist. Der Fahrzeugsitz kann jedoch auch in abweichender Ausrichtung, beispielsweise quer zur Fahrtrichtung verbaut werden.

Der in Fig. 1 gezeigte Fahrzeugsitz 1 für ein Kraftfahrzeug weist ein Sitzteil 2 und eine relativ zum Sitzteil 2 in ihrer Neigung einstellbare Lehne 4 auf. Eine Neigung der Lehne 4 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert. Der Längseinsteller 10 weist ein Schienenpaar 12, bevorzugt zwei Sitzschienenpaare 12, auf. Jedes Schienenpaar 12 ist aus einer ersten Sitzschiene 14, insbesondere zur Verbindung mit einem Sitzrahmenseitenteil 6, und einer zweiten Sitzschiene 16, insbesondere zur Verbindung mit einer Fahrzeugstruktur, gebildet. Die Sitzschienen 14, 16 des Sitzschienenpaares 12 sind in Längsrichtung x relativ zueinander verschiebbar.

Fig. 2 zeigt eine ausschnittsweise vergrößerte Ansicht auf ein hinteres Ende 26 des Längseinstellers 10. Die Sitzschienen 14, 16 des Sitzschienenpaares 12 umgreifen einander wechselseitig unter Bildung eines Innenkanals 18, wobei die erste Sitzschiene 14 zur Verbindung mit einem Sitzrahmenseitenteil 6 und die zweite Sitzschiene 16 zur Verbindung mit einer nicht dargestellte Fahrzeugstruktur dienen. In dem Innenkanal 18 ist ein an der zweiten Sitzschiene 16 fixierter Anker 20 angeordnet. In dem Innenkanal 18 ist ferner ein an der ersten Sitzschiene 14 fixiertes Verstärkungsprofil 22 angeordnet. Das Verstärkungsprofil 22 und der Anker 20 sind im Normalfall voneinander beabstandet und verhaken in Reaktion auf eine vorgegebene Krafteinwirkung, beispielsweise im Crashfall, miteinander, insbesondere greifen das Verstärkungsprofil 22 und der Anker 20 ineinander. Das Verstärkungsprofil 22 weist einen Verbindungsabschnitt 24 auf, welcher mit einem hinteren Ende 26, insbesondere mit einer nach hinten gerichteten Oberfläche 8, des Sitzrahmenseitenteils 6 verbunden ist. Der Verbindungsabschnitt 24 ist vorliegend einteilig mit dem Verstärkungsprofil 22 ausgestaltet. Der Verbindungsabschnitt 24 steht annähernd senkrecht von einem restlichen Grundkörper des Verstärkungsprofils 22 ab. Der Anker 20 kann beispielsweise mit der zweiten Sitzschiene 16 und einem fahrzeugspezifischen Sitzschienenadapter 50 befestigt sein. Der Sitzschienenadapter 50 dient bevorzugt einer Befestigung des Längseinstellers 10 mit einer Fahrzeugstruktur.

Das Verstärkungsprofil 22 und der Anker 20 sind bevorzugt aus Metall, insbesondere aus einem Metallblech, gefertigt. Das Verstärkungsprofil 22 kann beispielsweise bei einem auf einem Sitzschienenpaar 12 vormontierten Fahrzeugsitz 1 von hinten in das hintere Ende 26 des Innenkanals 18 zwischen der ersten Sitzschiene 14 und der zweiten Sitzschiene 16 eingeschoben werden. Das Verstärkungsprofil 22 ist mittels eines Fixierelements 28 in der nach hinten gerichteten Oberfläche 8 des Sitzrahmenseitenteils 6 gehalten. Das Fixierelement 28 kann beispielsweise ein Niet sein. Das Fixierelement 28 kann ebenso mittels einer Schraubverbindung bereitgestellt sein. Zusätzlich kann eine weitere Schraubverbindung an dem Sitzrahmenseitenteil 6 in Vertikalrichtung z durch die erste Sitzschiene 14 und das Verstärkungsprofil 22 hindurchragend angeordnet sein.

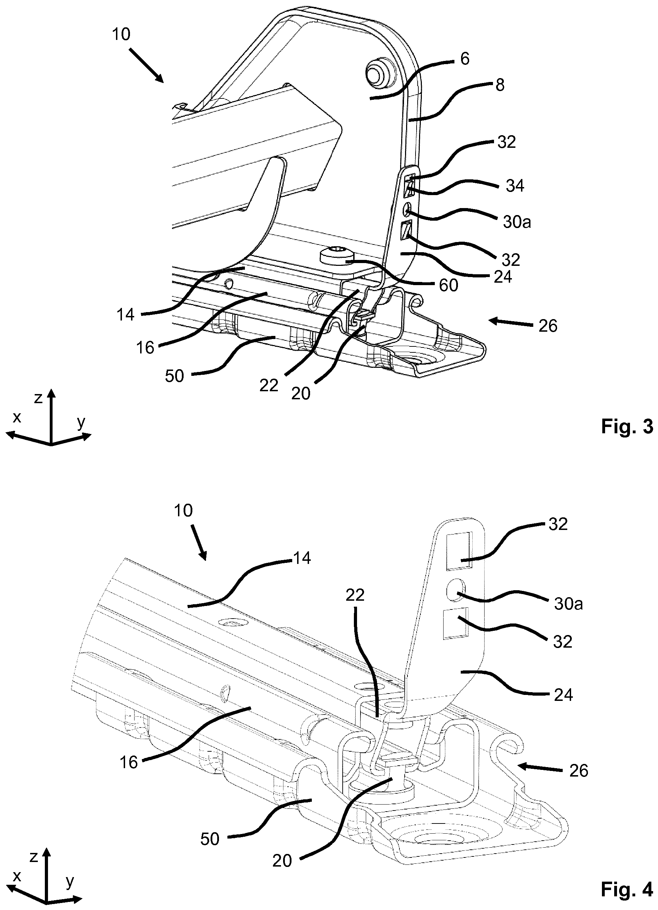

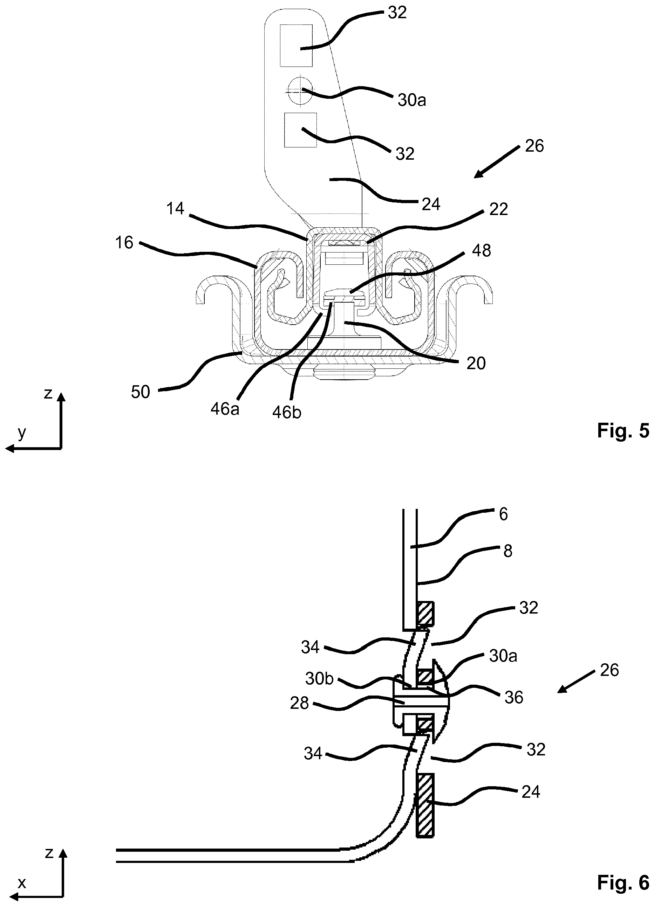

In Fig. 3 ist der Längseinsteller 10 gemäß Fig. 2 ohne das Fixierelement 28 und in Fig. 4 ohne das Sitzrahmenseitenteil 6 dargestellt. Fig. 5 und Fig. 6 zeigen eine Darstellung eines Querschnitts des Längseinstellers 10 von Fig. 4. Hierbei ist gezeigt, dass in dem Verbindungsabschnitt 24 und der nach hinten gerichteten Oberfläche 8 zur Verbindung mit dem Fixierelement 28 jeweils eine einander fluchtend ausgerichtete Durchgangsbohrung 30a, 30b vorgesehen ist. Der Verbindungsabschnitt 24 weist oberhalb und unterhalb der Durchgangsbohrung 30a jeweils eine Ausnehmung 32 auf. Der Grundkörper des Verstärkungsprofils 22 weist ein im Wesentlichen C-förmiges Querschnittsprofil auf.

Fig. 6 zeigt eine ausschnittsweise Schnittdarstellung senkrecht zu einer Querrichtung y durch den Längseinsteller 10 von Fig. 4. Das Sitzrahmenseitenteil 6 weist oberhalb und unterhalb der Durchgangsbohrung 30b einen Vorsprung 34 auf. In montiertem Zustand greifen die Vorsprünge 34 des Sitzrahmenseitenteils 6 in die Ausnehmungen 32 des Verbindungsabschnitts 24 des Verstärkungsprofils 22 ein. Ferner ist erkennbar, dass der Durchmesser der Durchgangsbohrung 30a im Verbindungsabschnitt 24 geringfügig größer ist, als der Durchmesser der Durchgangsbohrung 30b im Sitzrahmenseitenteil 6. Dies führt zu einem Spalt 36 zwischen dem Fixierelement 28 und dem Verbindungsabschnitt 24. Das Fixierelement 28 hält das Verstärkungsprofil 22 an dem Sitzrahmenseitenteil 6 lediglich in Längsrichtung x. Senkrecht zur Längsrichtung x hat das montierte Verstärkungsprofil 22 ein geringfügiges Spiel.

Die Vorsprünge 34 des Sitzrahmenseitenteils 6 sind vorliegend aus der nach hinten gerichteten Oberfläche 8 nach hinten ausgestellt, beispielsweise mittels Freischneidens und Umbiegens. Ebenfalls können die Vorsprünge 34 auch ausgeprägt oder an die nach hinten gerichtete Oberfläche 8 angeschweißt sein.

Im Falle einer übermäßigen Krafteinwirkung von hinten auf die Lehne 4 des Fahrzeugsitzes 1, wie dies beispielsweise durch ein ungesichertes, auf die Lehne 4 aufprallendes Transportgut im Crashfall hervorgerufen werden kann, wird ein Anheben des hinteren Endes 26 des Fahrzeugsitzes 1 und des Sitzrahmenseitenteils 6 in Vertikalrichtung z nach oben bewirkt. Bei dieser Fehlbelastung des Fahrzeugsitzes 1 gelangen jeweils eine obere Kante der Vorsprünge 34 mit einem oberen Randabschnitt der Ausnehmungen 32 in Eingriff. Hierbei ist es vorgesehen, dass Kräfte in Vertikalrichtung z über den Verbindungsabschnitt 24 in das Verstärkungsprofil 22 eingeleitet und nach einem Verkrallen des Verstärkungsprofils 22 und des Ankers 20 miteinander, unmittelbar weiter über den Anker 20 in die Fahrzeugstruktur eingeleitet werden kann. Eine Fehlbelastung, insbesondere eine zu hohe Belastung, der ersten und zweiten Sitzschienen 14, 16 in Vertikalrichtung z wird vermieden, wodurch ferner eine überlastbedingte Verformung der Sitzschienen 14, 16 bis hin zu einem sogenannten Ausschälen verhindert ist.

Die Anbindung des Verbindungsabschnitts 24 an den restlichen Körper des Verstärkungsprofils 22 erfolgt bevorzugt über im Wesentlichen die gesamte Breite des Verstärkungsprofils 22, vorliegend die gesamte Erstreckung in Querrichtung y, wodurch eine Belastbarkeit der Verbindung zwischen dem Sitzrahmenseitenteil 6 und dem Verstärkungsprofil 22 erhöht ist. Ferner ist die abzuleitende Kraft relativ zu einer Querrichtung y symmetrisch in einen in Längsrichtung y betrachtet linken und rechten Teil des Verstärkungsprofils 22 einleitbar.

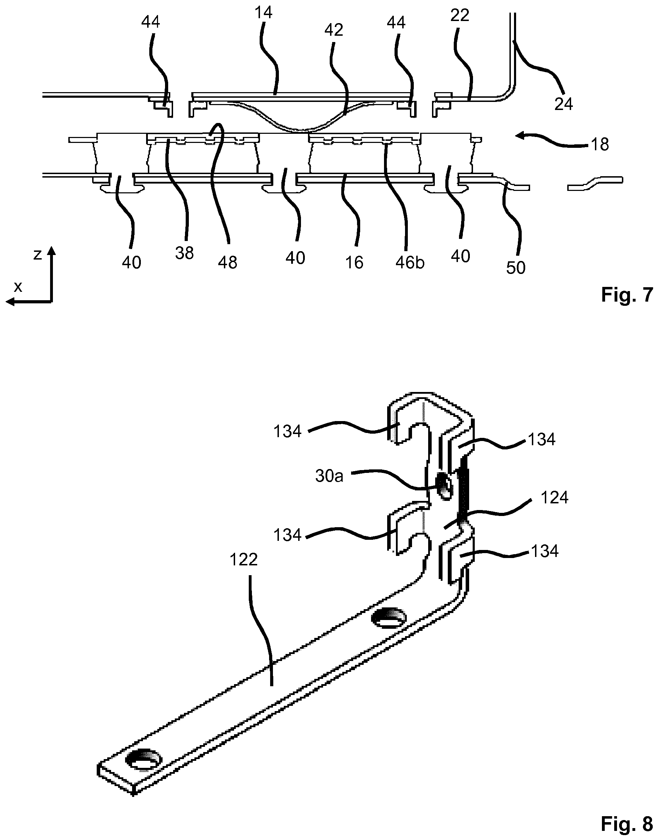

Fig. 7 zeigt eine Darstellung eines Längsschnitts senkrecht zur Querrichtung y durch den Längseinsteller 10 von Fig. 4. Im Inneren des Grundkörpers des Verstärkungsprofils 22 sind zwei Halteelemente 44 angeordnet, welche zur Fixierung des Verstärkungsprofils 22 mit der Oberschiene dienen. Zwischen den beiden Halteelementen 44 ist ein Federelement 42 gehalten und/oder verspannt. Das Federelement 42 kann bevorzugt als eine Blattfeder ausgestaltet sein. Das Verstärkungsprofil 22 weist in einem unteren Bereich, insbesondere im Bereich der beiden Endkanten des C-förmigen Querschnittsprofils, eine Verzahnung 46a auf.

Der Anker 20 weist eine Ankerplatte 38 auf, welche mittels dreier Ankerbolzen 40 an der zweiten Sitzschiene 16 gehalten ist. Die Ankerbolzen 40 halten die Ankerplatte 38 in Vertikalrichtung z in einem definierten Abstand zu einem Bodenabschnitt der zweiten Sitzschiene 16. Mit den jeweils der Ankerplatte 38 gegenüberliegenden Enden der Ankerbolzen 40, ist der Anker 20 in der zweiten Sitzschiene 16 und dem Sitzschienenadapter 50 gehalten. Darüber hinaus weist die Ankerplatte 38 eine nach unten gerichtete Gegenverzahnung 46b auf, welche mit der Verzahnung 46a des Verstärkungsprofils 22 in Eingriff bringbar ist, wenn das Verstärkungsprofil 22 aufgrund einer entsprechenden Fehlbelastung des Fahrzeugsitzes 1 nach oben gezogen wird. Der Eingriff der Verzahnung 46a und der Gegenverzahnung 46b sichern den Fahrzeugsitz nunmehr zusätzlich in der Längsrichtung x gegen ein bei der Fehlbelastung des Fahrzeugsitzes 1 unerwünschtes Längsverschieben.

Auf der Ankerplatte 38 ist ferner bevorzugt ein Puffer 48 angeordnet, welcher zur Bereitstellung und/oder Anpassung einer einheitlichen gleichmäßigen Oberfläche der Ankerplatte 38 und der Ankerbolzen 40 dient. An dieser Oberfläche stützt sich das Federelement 42 des Verstärkungsprofils 22 ab, wodurch ein unerwünschtes Klappergeräusch vermeidbar ist. Eine Federkraft des Federelements 42 ist derart bemessen, dass ein freies Spiel des Schienenpaares 12 zur Vermeidung von Klappergeräuschen reduziert ist, ohne hierdurch ein Eingreifen der Verzahnung 46a des Verstärkungsprofils 22 und der Gegenverzahnung 46b der Ankerplatte 38 zu bewirken.

In Fig. 8 ist ein Verstärkungsprofil 122 des Längseinstellers 10 in einer weiteren Ausführungsform gezeigt. Sofern nicht explizit abweichend beschrieben, stimmt das nachfolgende zweite Ausführungsbeispiel des Verstärkungsprofils 122 mit dem zuvor beschriebenen Verstärkungsprofil 22 überein. Das Verstärkungsprofil 122 weist in Querrichtung y betrachtet einen im Wesentlichen L-förmigen Querschnitt auf. Das Verstärkungsprofil 122 weist einen Verbindungsabschnitt 124 auf, welcher mit einer nach hinten gerichteten Oberfläche 8, des Sitzrahmenseitenteils 6 verbindbar ist. Der Verbindungsabschnitt 124 ist vorliegend einteilig mit dem Verstärkungsprofil 122 ausgestaltet. Der Verbindungsabschnitt 124 ist vorliegend um ca. 90° nach oben umgebogen und steht annähernd senkrecht von einem restlichen Grundkörper des Verstärkungsprofils 122 ab. An dem Verbindungsabschnitt 124 des Verstärkungsprofils 122 sind vorliegend vier Vorsprünge 134 angeordnet. Die Vorsprünge 134 stehen in Längsrichtung x nach vorne von dem Verbindungsabschnitt 124 ab. Die Vorsprünge 134 sind paarweise an jeweils einer linken und einer rechten Seite des Verbindungsabschnitts 124 angeordnet, insbesondere nach vorne umgebogen. Die Vorsprünge 134 sind hakenförmig ausgestaltet.

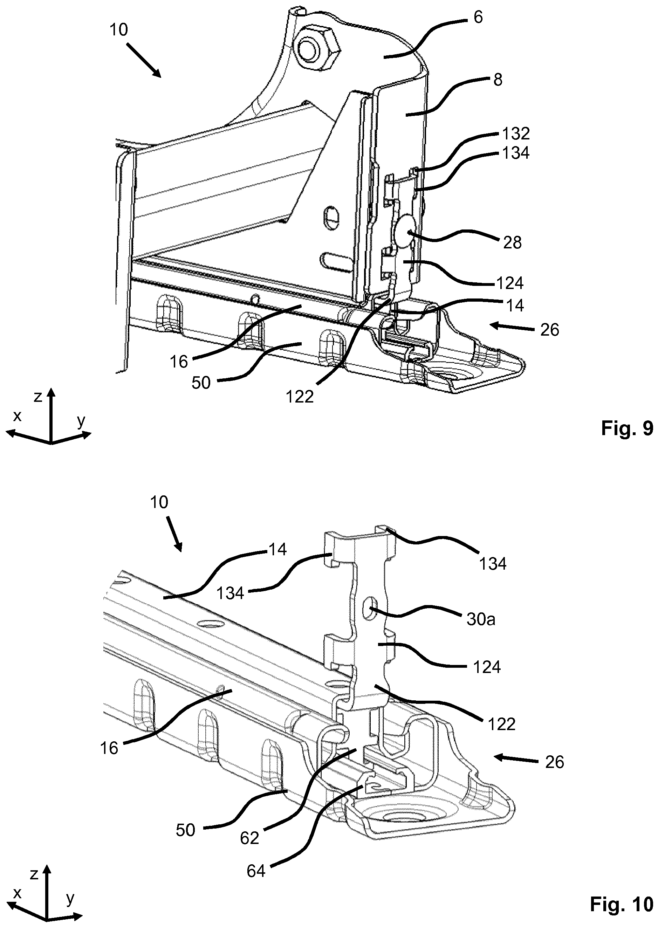

In Fig. 9 ist ein hinteres Ende des Längseinstellers 10 mit einem teilmontierten Verstärkungsprofil 122 gezeigt. Das Sitzrahmenseitenteil 6 weist vorliegend vier Ausnehmungen 132 auf. In montiertem Zustand greifen die Vorsprünge 134 des Verbindungsabschnitts 124 in die Ausnehmungen 132 des Sitzrahmenseitenteils 6 ein. Die Vorsprünge 134 hintergreifen im Falle einer Belastung des Sitzrahmenseitenteils 6 das Sitzrahmenseitenteil 6 im Bereich der Ausnehmungen 132. Im Normalfall sind die in den Ausnehmungen 132 eingeführten Vorsprünge 134 unter Bildung eines Spaltes von wenigstens einem unteren Randabschnitt der Ausnehmungen 132 beabstandet angeordnet. Im Belastungsfall, insbesondere wenn das hintere Ende 26 des Sitzrahmenseitenteils 6 nach oben kraftbeaufschlagt ist, gelangt wenigstens einer, bevorzugt jedoch alle, der Vorsprünge 134 in Kontakt mit dem Randabschnitt der jeweiligen Ausnehmung 132 und ist derart formschlüssig in Eingriff, dass die Vorsprünge 134 im Belastungsfall vor einem Austreten aus den Ausnehmungen 132 gesichert sind.

Fig. 10 zeigt eine Anordnung des Verstärkungsprofils 122 und des Schienenpaars 16 ohne das Sitzrahmenseitenteil 6. Das Verstärkungsprofil 122 ist mittels einer Schraube-Mutter-Anordnung an der ersten Sitzschiene 14 fixierbar. Vorliegend ist die Schraube 60 in den Figuren 7 bis 10 aus darstellungstechnischen Gründen nicht gezeigt, diese ist jedoch nach der Montage des Sitzrahmenseitenteils 6, bevorzugt wie in den Figuren 2 und 3 dargestellt, angeordnet. Eine Mutter 62, 162 der Schraube-Mutter-Anordnung weist einen derartigen Querschnitt auf, dass sich die Mutter 62, 162 seitlich wenigstens abschnittsweise an der ersten Sitzschiene 14 abstützt. Durch das Abstützen an der ersten Sitzschiene 14 ist die Mutter 62, 162 vor einem Verdrehen relativ zur ersten Sitzschiene 14 gesichert.

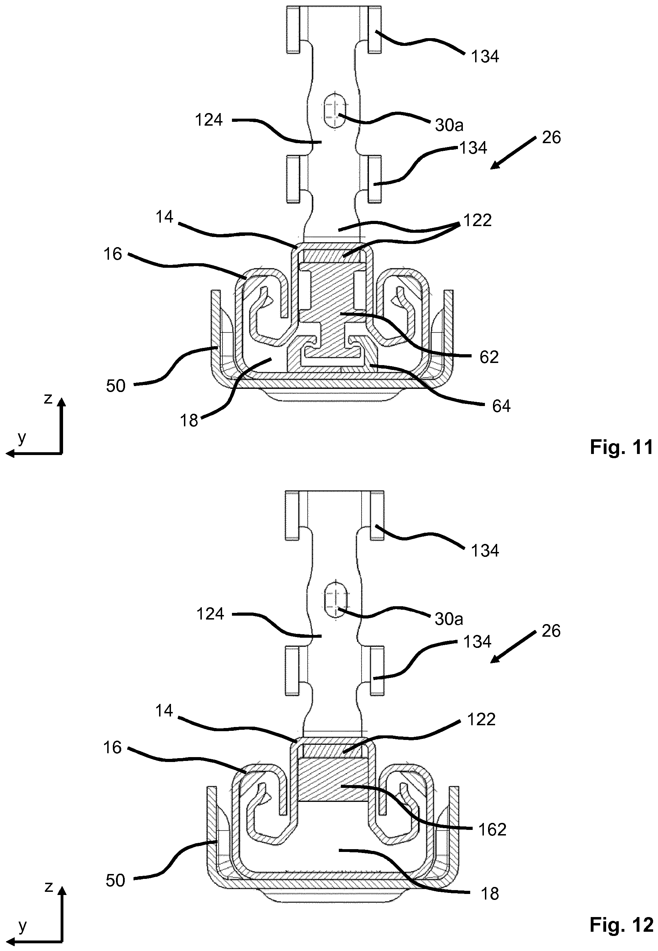

Fig. 11 zeigt eine Vorderansicht auf die Ausführungsform gemäß Fig. 9, wobei die Mutter 62 einen Querschnitt mit vorliegend vier seitlich angeordneten Längsnuten aufweist. Die Mutter 62 ist mit einem unteren Abschnitt des Querschnitts in einer Führungsschiene 64 führbar angeordnet. Die Führungsschiene 64 ist an der zweiten Sitzschiene 16 fixiert. Die Führungsschiene 64 ist im Querschnitt c-förmig ausgestaltet und greift mit ihren Enden in zwei gegenüberliegende Längsnuten des unteren Abschnitts der Mutter 62 ein. Folglich umgreifen die Führungsschiene 64 und die Mutter 62 einander wechselseitig.

Fig. 12 zeigt eine der Fig. 11 entsprechende Rückansicht auf eine Mutter 162 gemäß eines weiteren Ausführungsbeispiels. Die Mutter 162 weist einen rechteckigen Querschnitt auf, wobei eine Führung der Mutter 162 in einer Führungsschiene nicht vorgesehen ist. Das seitliche Abstützen der Mutter 162 in der ersten Sitzschiene 14 dient weiterhin der Verdrehsicherung der Mutter 162. Ferner dient es jedoch ebenfalls einer Stabilisierung der ersten Sitzschiene 14, so dass diese sich im Falle einer Überlastung nicht parallel zur Querrichtung y verformen kann, insbesondere in Richtung des Innenkanals 18 verbiegen kann.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 6: Sitzrahmenseitenteil
- 8: Oberfläche
- 10: Längseinsteller
- 12: Schienenpaar
- 14: erste Sitzschiene
- 16: zweite Sitzschiene
- 18: Innenkanal
- 20: Anker
- 22, 122: Verstärkungsprofil
- 24, 124: Verbindungsabschnitt
- 26: hinteres Ende
- 28: Fixierelement
- 30a: Durchgangsbohrung
- 30b: Durchgangsbohrung
- 32, 132: Ausnehmung
- 34, 134: Vorsprung
- 36: Spalt
- 38: Ankerplatte
- 40: Ankerbolzen
- 42: Federelement
- 44: Halteelement
- 46a: Verzahnung
- 46b: Gegenverzahnung
- 48: Puffer
- 50: Sitzschienenadapter
- 60: Schraube
- 62, 162: Mutter
- 64: Führungsschiene

- x: Längsrichtung
- y: Querrichtung
- z: Vertikalrichtung

## Patentansprüche

1. Längseinsteller (10) für einen Fahrzeugsitz (1), insbesondere Kraftfahrzeugsitz, aufweisend mindestens ein Schienenpaar (12), welches aus einer ersten Sitzschiene (14), insbesondere zur Verbindung mit einem Sitzrahmenseitenteil (6), und einer zweiten Sitzschiene (16), insbesondere zur Verbindung mit einer Fahrzeugstruktur, gebildet ist, wobei die Sitzschienen (14, 16) des Sitzschienenpaares (12) in Längsrichtung (x) relativ zueinander verschiebbar sind und unter Bildung eines Innenkanals (18) einander wechselseitig umgreifen, wobei in dem Innenkanal (18) ein an der ersten Sitzschiene (14) fixiertes Verstärkungsprofil (22; 122) angeordnet ist,
**dadurch gekennzeichnet, dass**
das Verstärkungsprofil (22; 122) einen Verbindungsabschnitt (24; 124) aufweist, welcher nach hinten aus dem Innenkanal (18) herausgeführt ist und mit einem hinteren Ende, insbesondere mit einer nach hinten gerichteten Oberfläche (8), eines Sitzrahmenseitenteils (6) verbindbar ist, wobei der Verbindungsabschnitt (24; 124) um ca. 90° um eine parallel zur Querrichtung (y) verlaufende Biegeachse nach oben umgebogen ist.

2. Längseinsteller (10) gemäß Anspruch 1, wobei der Verbindungsabschnitt (24; 124) einteilig mit dem Verstärkungsprofil (22; 122) ausgestaltet ist.

3. Längseinsteller (10) gemäß einem der Ansprüche 1 bis 2, wobei der Verbindungsabschnitt (24; 124) annähernd senkrecht von einem Grundkörper, insbesondere einem hinteren Ende des Grundkörpers, des Verstärkungsprofils (22; 122) absteht.

4. Längseinsteller (10) gemäß einem der Ansprüche 1 bis 3, wobei das Verstärkungsprofil (24; 124) aus Metall, insbesondere aus einem Metallblech, gefertigt ist.

5. Längseinsteller (10) gemäß einem der Ansprüche 1 bis 4, wobei das Verstärkungsprofil (22; 122) mittels einer Schraube-Mutter-Anordnung (60, 62; 162) an der ersten Sitzschiene (14) fixiert ist.

6. Längseinsteller (10) gemäß Anspruch 5, wobei eine Mutter (62; 162) der Schraube-Mutter-Anordnung (60, 62; 162) gegen ein Verdrehen relativ zur ersten Sitzschiene (14) gesichert ist.

7. Längseinsteller (10) gemäß einem der Ansprüche 5 oder 6, wobei eine Mutter (62; 162) der Schraube-Mutter-Anordnung (60, 62; 162) in einer im Innenkanal (18) an der zweiten Sitzschiene (16) angeordneten Führungsschiene (64) geführt ist.

8. Längseinsteller (10) gemäß einem der Ansprüche 1 bis 7, wobei das Verstärkungsprofil (22; 122) mittels eines Fixierelements (28) an einer nach hinten gerichteten Oberfläche (8) des Sitzrahmenseitenteils (6) gehalten ist.

9. Längseinsteller (10) gemäß einem der Ansprüche 1 bis 8, wobei der Verbindungsabschnitt (24; 124) einen Vorsprung (34; 134) und das Sitzrahmenseitenteil (6) eine Ausnehmung (32; 132) aufweist, wobei der Vorsprung (34; 134) des Verbindungsabschnitts (24) mit der Ausnehmung (32; 132) des Sitzrahmenseitenteils (6) in Eingriff bringbar ist.

10. Längseinsteller (10) gemäß Anspruch 9, wobei an dem Verbindungsabschnitt (24; 124) des Verstärkungsprofils (22; 122) eine Mehrzahl an Vorsprüngen (34; 134) angeordnet sind.

11. Längseinsteller (10) gemäß Anspruch 10, wobei die Vorsprünge (34; 134) in Längsrichtung (x) nach vorne von dem Verbindungsabschnitt (24; 124) abstehen.

12. Längseinsteller (10) gemäß einem der Ansprüche 10 oder 11, wobei die Vorsprünge (34; 134) paarweise je an einer linken und einer rechten Seite des Verbindungsabschnitts (24; 124) angeordnet, insbesondere nach vorne weisend ausgerichtet, sind.

13. Längseinsteller (10) gemäß einem der Ansprüche 1 bis 12, wobei in dem Verbindungsabschnitt (24; 124) und der nach hinten gerichteten Oberfläche (8) zur Verbindung mittels des Fixierelements (28) jeweils eine Durchgangsbohrung (30a, 30b) vorgesehen ist.

14. Längseinsteller (10) gemäß Anspruch 13, wobei ein Durchmesser der Durchgangsbohrung (30a) im Verbindungsabschnitt (24) geringfügig größer ist, als ein Durchmesser der Durchgangsbohrung (30b) im Sitzrahmenseitenteil (6).

15. Fahrzeugsitz (1), umfassend einen Längseinsteller (10) nach einem der vorhergehenden Ansprüche 1 bis 14, wobei der Fahrzeugsitz (1) ein Sitzrahmenseitenteil (6) aufweist, welches mit einer ersten Sitzschiene (14) verbunden ist.

## Claims

1. Longitudinal adjuster (10) for a vehicle seat (1), in particular a motor vehicle seat, having at least one pair of rails (12) which is formed from a first seat rail (14), in particular for connecting to a seat-frame side part (6), and a second seat rail (16), in particular for connecting to a vehicle structure, wherein the seat rails (14, 16) of the seat rail pair (12) are movable in a longitudinal direction (x) relative to one another and engage reciprocally around one another, forming an internal channel (18), wherein a reinforcement profile (22; 122) that is fixed to the first seat rail (14) is arranged in the internal channel (18),
**characterized in that**
the reinforcement profile (22; 122) has a connecting portion (24; 124) which passes rearwardly out of the internal channel (18) and is connectable to a rear end, in particular to a rearwardly directed surface (8), of a seat-frame side part (6), wherein the connecting portion (24; 124) is bent upwardly through about 90° about a bending axis extending parallel to the transverse direction (y).

2. Longitudinal adjuster (10) according to Claim 1, wherein the connecting portion (24; 124) is configured in one piece with the reinforcement profile (22; 122).

3. Longitudinal adjuster (10) according to either of Claims 1 and 2, wherein the connecting portion (24; 124) protrudes approximately perpendicularly from a main body, in particular a rear end of the main body, of the reinforcement profile (22; 122).

4. Longitudinal adjuster (10) according to any of Claims 1 to 3, wherein the reinforcement profile (24; 124) is manufactured from metal, in particular from a metal sheet.

5. Longitudinal adjuster (10) according to any of Claims 1 to 4, wherein the reinforcement profile (22; 122) is fixed to the first seat rail (14) by means of a screw/nut arrangement (60, 62; 162).

6. Longitudinal adjuster (10) according to Claim 5, wherein a nut (62; 162) of the screw/nut arrangement (60, 62; 162) is secured against twisting relative to the first seat rail (14).

7. Longitudinal adjuster (10) according to either of Claims 5 and 6, wherein a nut (62; 162) of the screw/nut arrangement (60, 62; 162) is guided in a guide rail (64) arranged in the internal channel (18) on the second seat rail (16).

8. Longitudinal adjuster (10) according to any of Claims 1 to 7, wherein the reinforcement profile (22; 122) is retained by means of a fixing element (28) on a rearwardly directed surface (8) of the seat-frame side part (6).

9. Longitudinal adjuster (10) according to any of Claims 1 to 8, wherein the connecting portion (24; 124) has a protrusion (34; 134) and the seat-frame side part (6) has a cutout (32; 132), wherein the protrusion (34; 134) of the connecting portion (24) is able to be brought into engagement with the cutout (32; 132) in the seat-frame side part (6).

10. Longitudinal adjuster (10) according to Claim 9, wherein a plurality of protrusions (34; 134) are arranged on the connecting portion (24; 124) of the reinforcement profile (22; 122).

11. Longitudinal adjuster (10) according to Claim 10, wherein the protrusions (34; 134) protrude forwardly in the longitudinal direction (x) from the connecting portion (24; 124).

12. Longitudinal adjuster (10) according to either of Claims 10 and 11, wherein the protrusions (34; 134) are arranged in pairs respectively on a left-hand and a right-hand side of the connecting portion (24; 124), in particular oriented so as to point forward.

13. Longitudinal adjuster (10) according to any of Claims 1 to 12, wherein a through-bore (30a, 30b) is provided respectively in the connecting portion (24; 124) and in the rearwardly directed surface (8) for connecting by means of the fixing element (28).

14. Longitudinal adjuster (10) according to Claim 13, wherein a diameter of the through-bore (30a) in the connecting portion (24) is slightly larger than a diameter of the through-bore (30b) in the seat-frame side part (6).

15. Vehicle seat (1) comprising a longitudinal adjuster (10) according to any of the preceding Claims 1 to 14, wherein the vehicle seat (1) has a seat-frame side part (6) which is connected to a first seat rail (14).

## Revendications

1. Dispositif de réglage longitudinal (10) pour un siège de véhicule (1), notamment un siège de véhicule automobile, comportant au moins une paire de rails (12) constituée d'un premier rail de siège (14), notamment à relier à une partie latérale de cadre de siège (6), et un deuxième rail de siège (16), notamment à relier à une structure de véhicule, les rails de siège (14, 16) de la paire de rails de siège (12) pouvant être déplacés dans la direction longitudinale (x) l'un par rapport à l'autre et étant imbriqués l'un dans l'autre de façon alternée en formant un canal intérieur (18), un profil de renforcement (22 ; 122) fixé au premier rail de siège (14) étant disposé dans le canal intérieur (18), **caractérisé en ce que** :
le profil de renforcement (22 ; 122) comporte une section de jonction (24 ; 124) réalisée vers l'arrière hors du canal intérieur (18) et pouvant être reliée à une extrémité arrière, notamment à une surface (8) orientée vers l'arrière, d'une partie latérale de cadre de siège (6), la section de jonction (24 ; 124) étant incurvée d'environ 90° autour d'un axe de flexion s'étendant vers le haut parallèlement à la direction transversale (y).

2. Dispositif de réglage longitudinal (10) selon la revendication 1, dans lequel la section de jonction (24 ; 124) est configurée d'un seul tenant avec le profil de renforcement (22 ; 122).

3. Dispositif de réglage longitudinal (10) selon l'une quelconque des revendications 1 à 2, dans lequel la section de jonction (24 ; 124) pend quasi perpendiculairement par rapport à un corps de base, notamment une extrémité arrière du corps de base, du profil de renforcement (22 ; 122).

4. Dispositif de réglage longitudinal (10) selon l'une quelconque des revendications 1 à 3, dans lequel le profil de renforcement (24 ; 124) est fabriqué en métal, notamment en tôle métallique.

5. Dispositif de réglage longitudinal (10) selon l'une quelconque des revendications 1 à 4, dans lequel le profil de renforcement (22 ; 122) est fixé au premier rail de siège (14) à l'aide d'un agencement vis-écrou (60, 62 ; 162).

6. Dispositif de réglage longitudinal (10) selon la revendication 5, dans lequel un écrou (62 ; 162) de l'agencement vis-écrou (60, 62 ; 162) est fixé contre les torsions par rapport au premier rail de siège (14).

7. Dispositif de réglage longitudinal (10) selon l'une quelconque des revendications 5 ou 6, dans lequel un écrou (62 ; 162) de l'agencement vis-écrou (60, 62 ; 162) est guidé dans un rail de guidage (64) disposé à l'intérieur du canal intérieur (18) au niveau du deuxième rail de siège (16).

8. Dispositif de réglage longitudinal (10) selon l'une quelconque des revendications 1 à 7, le profil de renforcement (22 ; 122) étant maintenu à l'aide d'un élément de fixation (28) au niveau d'une surface (8) orientée vers l'arrière de la partie latérale de cadre de siège (6).

9. Dispositif de réglage longitudinal (10) selon l'une quelconque des revendications 1 à 8, dans lequel la section de jonction (24 ; 124) comporte une saillie (34 ; 134) et la partie latérale de cadre de siège (6) comporte un évidement (32 ; 132), la saillie (34 ; 134) de la section de jonction (24) pouvant être amenée en prise avec l'évidement (32 ; 132) de la partie latérale de cadre de siège (6).

10. Dispositif de réglage longitudinal (10) selon la revendication 9, dans lequel une pluralité de saillies (34 ; 134) sont disposées au niveau de la section de jonction (24 ; 124) du profil de renforcement (22 ; 122) .

11. Dispositif de réglage longitudinal (10) selon la revendication 10, dans lequel les saillies (34 ; 134) pendent vers l'avant dans la direction longitudinale (x) depuis la section de jonction (24 ; 124).

12. Dispositif de réglage longitudinal (10) selon l'une quelconque des revendications 10 ou 11, dans lequel les saillies (34 ; 134) sont disposées par paire respectivement au niveau d'un côté gauche et d'un côté droit de la section de jonction (24 ; 124), notamment orientées vers l'avant.

13. Dispositif de réglage longitudinal (10) selon l'une quelconque des revendications 1 à 12, dans lequel un alésage traversant (30a, 30b) est respectivement prévu dans la section de jonction (24 ; 124) et la surface (8) orientée vers l'arrière pour la liaison à l'aide de l'élément de fixation (28).

14. Dispositif de réglage longitudinal (10) selon la revendication 13, dans lequel un diamètre de l'alésage traversant (30a) est légèrement plus important dans la section de jonction (24) qu'un diamètre de l'alésage traversant (30b) dans la partie latérale de cadre de siège (6).

15. Siège de véhicule (1), comprenant un dispositif de réglage longitudinal (10) selon l'une quelconque des revendications précédentes 1 à 14, dans lequel le siège de véhicule (1) comporte une partie latérale de cadre de siège (6) reliée à un premier rail de siège (14).
